# EUROPEAN PATENT APPLICATION

(11) **EP 2 911 407 A1**
(43) Date of publication of application: **26.08.2015**
(21) Application number: 14305229.8
(22) Date of filing: 19.02.2014
(51) Int. Cl.: H04N 21/475

(54) **Method and apparatus for providing supplemental information associated with a tv program**

(71) Applicant: Thomson Licensing, 92130 Issy-les-Moulineaux (FR)
(72) Inventor: Marquant, Gwenaelle, 35630 La Chapel Chaussée (FR); Demoulin, Vincent, 35160 Montfort sur Mer (FR); Thudor, Franck, 35000 Rennes (FR)
(74) Representative: Rossmanith, Manfred

(57) **Abstract**

A method and a TV receiver for updating child protection information in an IPTV system are suggested. The suggested method switches through all receivable TV channels, searches for child protection information and stores such information together with the associated TV channel number in a memory. If the user switches to a new TV channel then as a first step it is checked if for the newly selected TV channel child protection information is stored and if it is within a predefined allowed range. In this way adolescent users are effectively protected against offensive content.

## Description

### Field

The present invention is related to a method and an apparatus for providing supplemental information associated with a TV program. In particular, the invention is related to a method and an apparatus for providing a reliable display of child protection information in an IPTV system.

### Background

TV logo detection plays an important role in child protection. In some countries, like in France, child protection logos or icons are used to communicate to the user that some programs should not be watched by children below a certain age. In other countries, for example in Germany, a text insertion is displayed before the program starts showing a child protection recommendation. Sometimes there is also a combination of text insertion and logo or icon. However, in some programs or TV broadcasts these kinds of text insertion or logos appear only for a short period of time at the beginning of the program. If the user switches the TV receiver on or changes to another channel after the beginning of the program then the user may miss the information that the program is not appropriate for children under a given age. Child protection information is not always, or not always in a reliable manner, available as meta-data or in electronic program guides (EPGs).

In the co-pending European patent application EP 13 305 577.2 of the same applicant a method and an apparatus for updating supplementary information, such as child protection information, in broadcast TV programs is described. However, EP 13 305 577.2 is based on the use of tuners and, therefore, does not address IPTV systems.

Consequently, there remains a need to improve child protection information for IPTV systems at least in those countries where such kind of information is not permanently broadcast in conjunction with the TV program but only at the beginning of a program.

### Summary

This invention disclosure describes a system for efficient and reliable display of child protection logos when switching or simply zapping through TV channels available in an IPTV system. The suggested method and apparatus is suitable to complete the data delivered by the EPG which are not always correct due to synchronization and program change issues. Embodiments of the present invention are implemented in a set top box or on a Digital Subscriber Line Access Multiplexer (DSLAM) for the advanced analysis and monitoring of television channel logos and especially child protection logos. Embodiments of the present invention improve the reliability that child protection information which is sent along the broadcasted content actually becomes displayed on a screen. According to a first aspect a method for providing supplemental information associated with a television program in an IPTV system is suggested. The method comprises
- switching all receivable TV channels with a TV decoder;
- detecting sequentially child protection information contained in the video signal of the received TV channels; and if child protection information is detected, then
- storing the detected child protection information in conjunction with an identifier of the associated TV channel in a memory.

In an embodiment the method further comprises the step of
- switching to a TV channel selected by a user;
- checking if for the selected TV channel a child protection information is stored, and if such child protection information is found, then
- verifying if the child protection information is within a predefined range;
- displaying the image of the selected TV channel if the child protection information is within the predefined allowed range; and
- executing a user defined action if the child protection information is outside the predefined allowed range.

Advantageously, the method may further comprise the step of displaying the stored child protection information together with the image of the selected TV channel for a limited period of time.

In an alternative embodiment the method further comprises the step of displaying a message that the selected TV channel is associated with child protection information outside the allowed range.

In another embodiment the method further comprises the steps of verifying if the TV decoder is operated within an open time window if no child protection information is found;
displaying the image of the selected TV channel if the TV receiver is operated within the open time window; and
executing a user defined action if the TV decoder is operating outside the open time window.

This embodiment of the invention uses the fact that offensive content is mainly broadcasted in the late evening and not when it is likely that the entire family is watching a TV program. In the present patent application this latter period of time is called "open time window". Therefore, during this open time window it is acceptable that the image of the TV program is displayed even when no child protection information is available. Only outside the open time window the display of the image is e.g. blocked as a matter of precaution.

It has been found useful if the method further comprises the step of displaying a message requesting the user to enter a code to enable the display of the selected TV channel.

In an advantageous embodiment the method further comprises the step of displaying upon user request a list of receivable TV channels in conjunction with the associated and stored child protection information.

According to a variant of the inventive method the user defined action includes blocking the image of the selected TV channel.

According to a second aspect a television receiver is suggested. The television receiver includes a computer network access device providing the TV receiver with IP-TV signals. The TV receiver further includes a TV decoder, and a child protection decoder. The TV decoder provides a video signal selected by the user that eventually is displayed. The child protection receiver switches through all receivable TV channels and sequentially detects child protection information contained in the video signal of the TV channel which is currently processed, and if child protection information is detected, then the detected child protection information is stored in conjunction with an identifier of the associated TV channel in a memory.

In an embodiment of the inventive television receiver TV channel navigation is restricted to those TV channels associated with child protection information within a predefined allowed range or with no child protection information.

In another embodiment of the invention the television receiver comprising means to restrict TV channel navigation to those TV channels associated with child protection information within a predefined allowed range or no child protection information is stored for the selected TV channel when the TV receiver is operated within a predefined open time window.

According to the third aspect a digital subscriber line access multiplexer is suggested. An embodiment of the inventive Digital Subscriber line access multiplexer (DSLAM) includes a child protection decoder and a memory. The DSLAM is adapted to execute a method according to the first aspect of the invention.

### Brief Description of the Drawings

In the drawings, embodiments of the present invention are illustrated. It shows:
Figs. 1A and 1B the display of child protection information in two different formats;
Fig. 2 a schematic diagram of the architecture of an IPTV system;
Fig. 3 devices in user premises connected to the IPTV system shown in figure 2;
Fig. 4 a schematic partial overview of the architecture of a first embodiment of the IPTV system shown in Fig. 2;
Fig. 5 a schematic flow diagram illustrating the method of storing logo and channel information;
Fig. 6 a schematic flow diagram of a method for improving child protection; and
Fig. 7 a schematic partial overview of the architecture of a second embodiment of the IPTV system shown in Fig. 2.

Similar or same elements are referenced with the same reference numbers.

### Detailed description

In the entire specification of the present patent application, the term "program" refers to broadcasted content. The term "channel" is used to distinguish different broadcasters available in an IPTV system. The term "IPTV system" shall cover any system distributing content by means of the Internet Protocol utilizing open and/or closed networks with and without guaranteed quality of service. The networks include the Internet.

In the present patent application, the terms "television receiver" or "receiver" refer to any device capable of receiving a particular channel within an incoming television signal including, but not limited to, television sets, DVD players, BD players, set-top boxes, PC card, etc. It is noted that a television set includes a display and necessary driver circuit for driving the display.

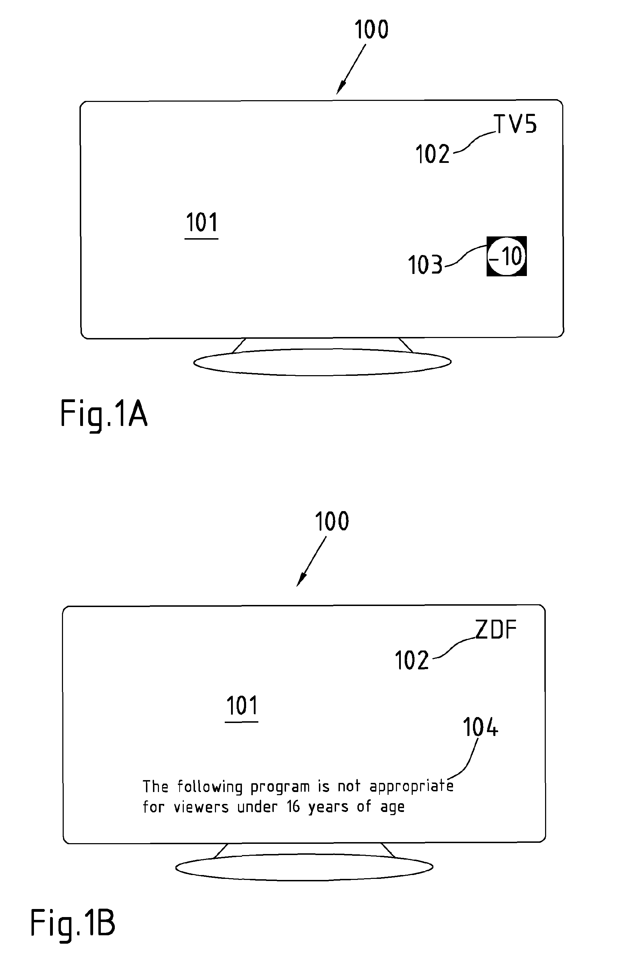

Figure 1A displays schematically the front view of a TV set 100. The TV set 100 includes a TV screen 101 for displaying images. In Figure 1A, the displayed image of the program received by the TV set is not shown for the sake of simplicity. In the upper right corner of the TV screen 101 the logo 102 of the broadcaster "TV5" is displayed to inform the user which broadcaster he has selected. In the lower right corner a child protection logo 103 is displayed. The child protection logo 103 has a format which is used in France. The child protection logo 103 shown in Figure 1A means that the currently received program is not appropriate for children under the age of 10.

Figure 1B also shows a front view of the TV set 100 receiving the program of the broadcaster ZDF as it is indicated by the broadcaster logo "ZDF" 102 in the upper right corner of the screen 101. In the example shown in Figure 1B, the child protection information is not provided in the form of a logo but as a text insertion 104 providing the user with the child protection information in text form. This format of the child protection information is used for example in Germany. However, the present invention is applicable regardless of the format of the child protection information whether it is provided as a logo or as a text insertion. The method for detecting such child protection information will be described in greater detail below.

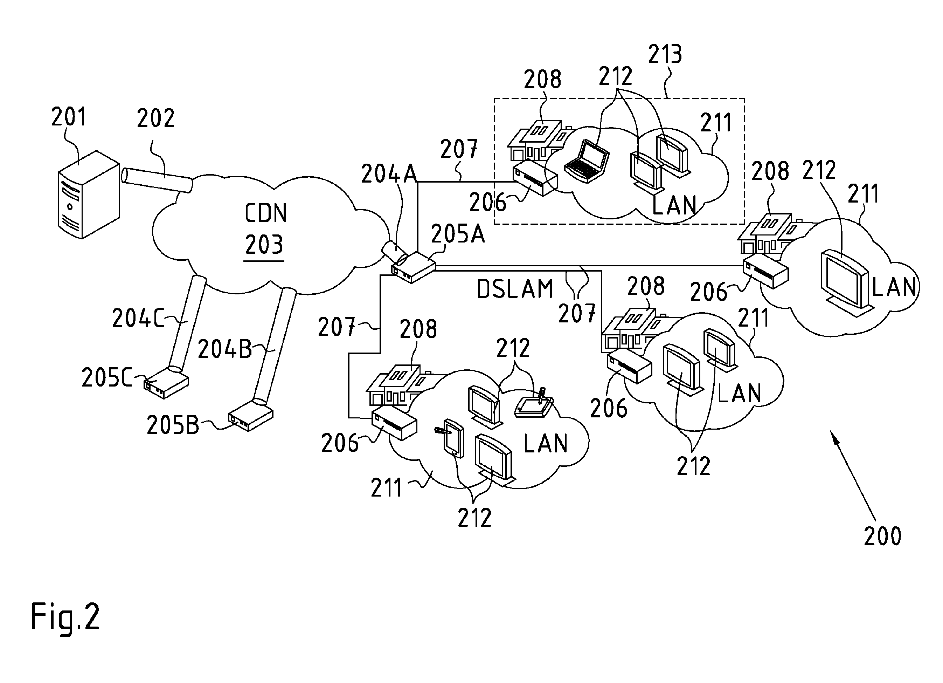

Figure 2 schematically shows an IPTV system which is denominated as a whole with reference number 200. The IPTV system 200 includes a content service provider (CSP) which is symbolized in figure 2 by a video server 201. The server 201 is connected with a data link 202 to a content delivery network (CDN) 203. Further data links 204A-204C establish connections with digital subscriber line access multiplexers (DSLAM) 205A-205C. For the sake of conciseness we consider in the following only DSLAM 205A because the user networks connected to each one of the DSLAMs are similar in principle, though the user networks may be different in details. It is therefore sufficient to consider DSLAM 205A and the networks connected to it to explain the present invention.

A plurality of gateways 206 is connected with DSLAM 205A by means of connections 207. The connections 207 are e.g. twisted wire lines. The gateways 206 are located in the homes or apartments 208 of the users denoted in the following as user premises.

In figure 2 four subscribers or user premises 208 are connected to the DSLAM 205A. However, this is only for illustrative purposes. In practice, a smaller or larger number of gateways 206 can be connected to the DSLAM 205A. In each one of the user premises 208, there is a wired or wireless local area network (LAN) 211 connecting a variety of devices 212 such as computers, TVs, mobile communication devices, television decoders (set-top boxes, STBs) etc.

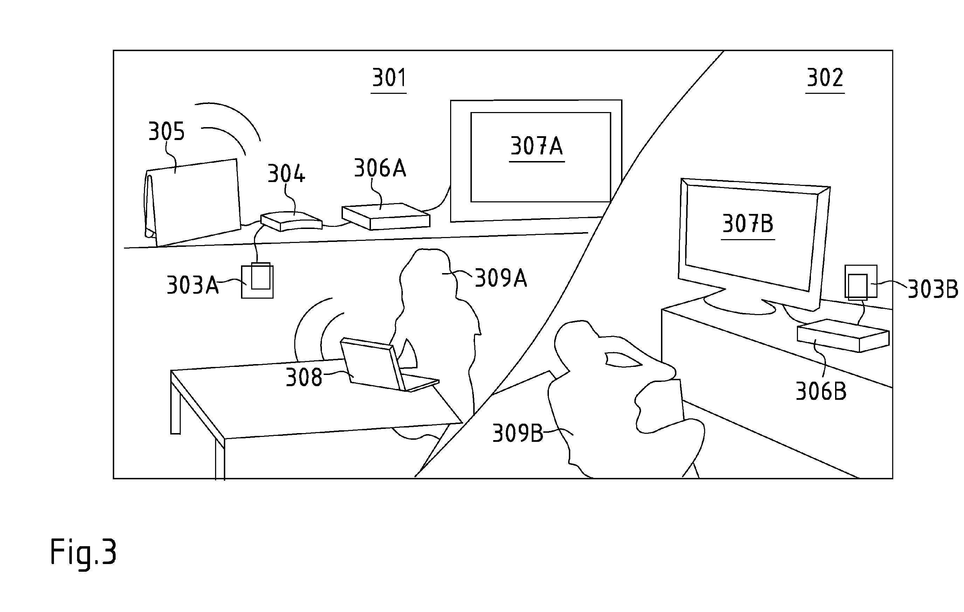

The data links 202 and 204A-204C have a much higher maximum data rate than the connections 207. Therefore, it is possible to stream simultaneously content to many users connected to each one of the DSLAMs 205A-205D. The local area network 211 and its connected devices shown in the dashed frame 213 are illustrated in greater detail in figure 3.

Specifically, figure 3 shows two rooms 301 and 302. The gateway 206 (not shown in figure 3) is connected to a power line network in the users' premises enabling several users connecting to the network 211 by means of power line plugs 303A and 303B. Power line plug 303A is connected with an Ethernet switch 304 connecting a wireless LAN transmitter/receiver 305 and a TV decoder 306A. The TV decoder 306A provides a TV signal to a TV receiver 307A in room 301. Furthermore, a portable computer 308 is connected to the wireless network 211. Finally, figure 3 shows a person 309A working on the computer 308 and a person 309B watching a TV program on a TV receiver 307B located in room 302. The TV receiver 307B is connected to a TV decoder 306B which is connected via the power line plug 303B to the network 211.

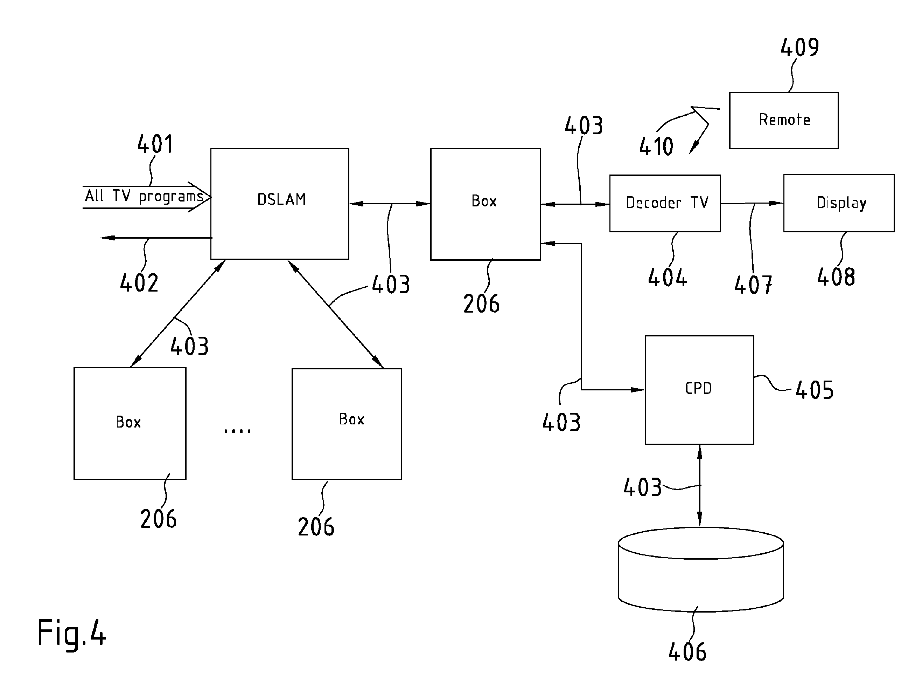

Figure 4 illustrates the global architecture of a first embodiment of the IPTV system 200 from the DSLAM 205 to a display device. The DSLAM 205 receives all TV channels that can be selected by a user from the video server 201 (figure 2) through the content delivery network (CDN) 203 and the data link 204. If the user selects a content that already exists on the level of the DSLAM 205 then the requesting gateway 206 receives a copy of the content which the DSLAM 205 already delivers to another gateway. If the requested content does not already exist at the DSLAM 205, it requests the content from the video server 201. The video server 201 sends the video content back to the DSLAM 205 which delivers it to the gateway 206. In the user premises, the gateway 206, a TV decoder 404, a child protection decoder (CPD) 405, and a memory 406, are connected with each other by a local area network.

The data volume sent from the video server 201 to the DSLAM 205 is much bigger than the request commands sent from the DSLAM 205 to the video server 201. This fact is symbolized in figure 4 by a broad arrow 401 directed to the DSLAM 205 and a slim arrow 402 from the DSLAM 205. The connection to and from the DSLAM 205 corresponds to the link 204 shown in figure 2. All other links 403 between the DSLAM 205 and the gateway 206, between gateway 206 and TV decoder 404, child protection decoder 405 and database 406 are also bidirectional connections. The TV decoder 404 provides audio and video signals through a unidirectional connection 407 to a display device 408. A remote control 409 enables the user to control the TV decoder 404 by sending command signals over an infrared (IR) connection 410. The functionality of the child protection decoder 405 will be explained further below.

It is noted that not all content is stored on the DSLAM 205 but only content which is delivered to one of the gateways 206 connected to the DSLAM 205. The DSLAM 205 receives all TV channels that can be requested by the user controlling the TV decoder 404 by means of the remote control 409. Only the requested TV channels are delivered by the DSLAM 205 to the gateway 206. If several channels are delivered simultaneously the gateway 206 dispatches them between different TV decoders like the TV decoders 306A and 306B shown in figure 3. It is also noted that between the DSLAM 205 and the gateway 206 the data traffic contains one or several TV programs, Internet data and voice data.

The TV decoder 404 decodes the IPTV stream extracted and delivered by the gateway 206. The child protection decoder (CPD) 405 continuously switches through all receivable TV streams to pick up child protection information contained in the video data. The child protection information is extracted from the video data by a software application running on a processing unit of the child protection decoder 405. The child protection decoder 405 is dedicated to accumulate information for all receivable TV streams. The information is stored in a memory 406 located in the gateway 206 such that information in the memory is available for all TV decoders in the same house or apartment.

In another embodiment, the child protection information is sent back to the DSLAM and stored there in a memory. In this case, all gateways connected to the same DSLAM 205, have access to the information that is almost immediately available for any gateway connected to the DSLAM without needing to switch through at first all receivable TV channels.

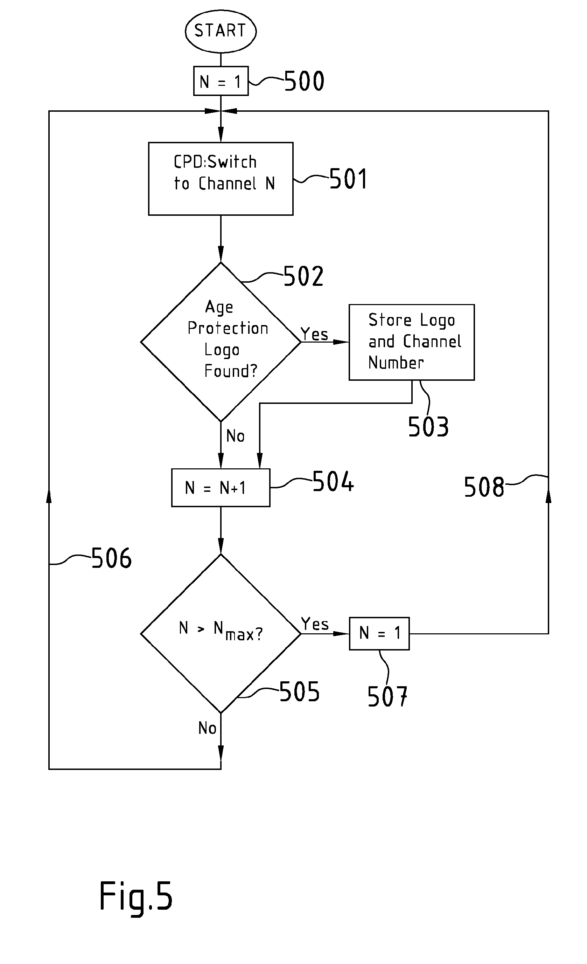

Figure 5 illustrates the process of searching for child protection information in greater detail as a flow diagram. The process is started once the child protection decoder 405 is switched on. At first the channel number N is initialized to be "N=1" in step 500. In step 501 the child protection decoder 405 switches to channel number "N". In step 502 the child protection decoder 405 verifies if the received program contains child protection information e.g. in the form of a logo 103 or as a text insertion 104. If such kind of information is found then the information is stored in step 503 in memory 406 in conjunction with the associated channel number of the program that contained the information.

After completion of step 503 or if such information is not found then the child protection decoder 405 moves on to step 504 and increments the channel number by one establishing a new channel number, i.e. "N = N+1". In step 505 the child protection decoder 405 checks if the maximum channel number Nmax has been reached. If the current channel number is still smaller than or equal to the maximum channel number Nmax then the child protection decoder 405 switches to the new channel number as it is indicated by the return loop 506. However, if the new channel number is greater than the maximum channel number Nmax then the channel number N is reset to 1 in step 507 and the entire process begins anew as it is indicated by return loop 508.

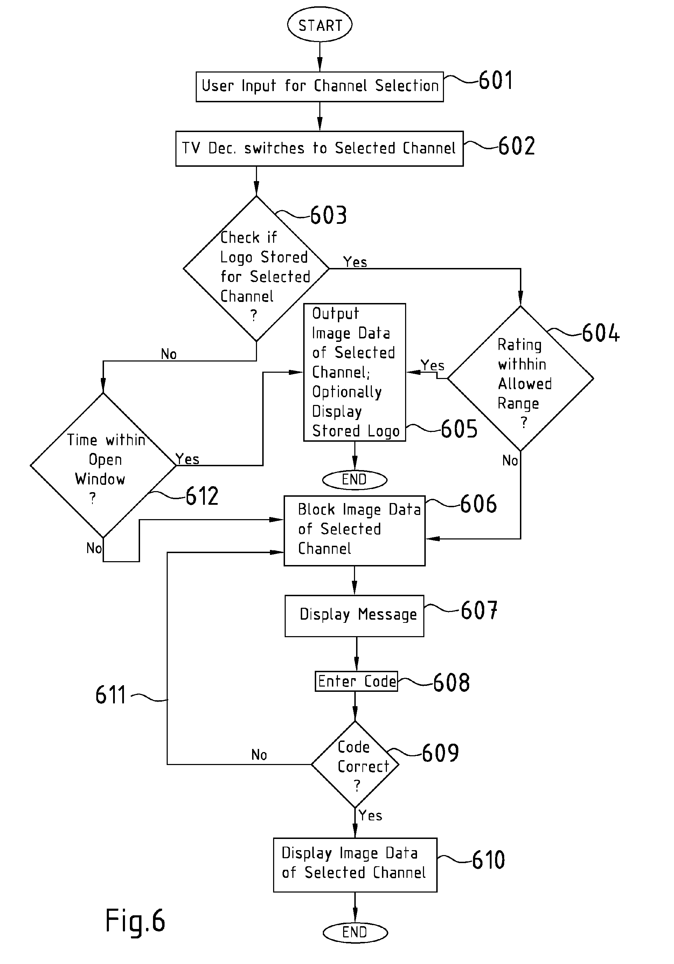

In parallel and simultaneously to the application searching for child protection information, a display control application runs on the TV decoder 404. The display control application controls if images are displayed on the display 408 or not and provides user selection options in response to the presence or absence of child protection information. The details of this application are explained in conjunction with a flow diagram shown in Figure 6.

A user menu contains the option to disable the display control application e.g. by entering a secret code e.g. when no child is at home. When the display control application is disabled, the latency is reduced when a user switches through channels.

The display control application is initiated every time the user inputs a channel selection command to the TV decoder 404 in step 601. This user command is received by the CPU of the TV decoder 404 which requests the TV decoder 404 to switch to the selected channel in step 602. In step 603 the display control application checks if child protection information (logo or text insertion 103 or 104) is stored in memory 406 for the selected channel number. If a child protection information is found for the selected channel number then the display control application checks in step 604 if the corresponding child protection rating is within an allowed range. The allowed range is predefined in the TV decoder 404 and can be changed by the user by accessing a protected menu. The allowed range of child protection may be defined e. g. to allow films which are not appropriate for children under the age of 10 but may block films which are not appropriate for children under the age of 16. The user may choose this setting according to the youngest child that needs to be protected from offensive content on the TV. If the rating found in the memory for the selected channel number remains within the allowed range then the television program is displayed normally in step 605.

In a specific embodiment of the present invention, the stored child protection information is displayed together with the TV program for a few seconds to inform the user about the child protection information. The period of time during which the child protection information is also displayed can be adapted to the needs of the user. However, if the rating of the child protection information found in the memory 406 is not within the allowed range then the output of the images of the selected television program is blocked in step 606. In other embodiments of the invention, the image of the selected TV program is not blocked but rather the user is offered to take a decision, i.e. either display the image or block the image or take another action e.g. record the program for viewing it at a later point in time. Optionally, the recording can be protected with a code. If the image of the selected TV program is blocked, a message is displayed in step 607 instead of the television program. The displayed message informs the user that the selected TV program is associated with a child protection outside the allowed range. Optionally, the user is requested in step 608 to enter a code to unblock the display of the television program.

In step 609 it is verified if the entered code is correct and, if so, the image of the selected channel is displayed in step 610. If the code is not correct, feedback loop 611 returns to step 606 and the image data remains blocked until the correct code is entered or the user switches to another channel. This is a useful feature for example if parents would like to watch a film in the evening which is not appropriate for their youngest child. In such a situation the parents are only required to enter the code which is secret to their children.

Going back to step 603 in which it is checked if for the selected channel number a child protection information is stored in the memory. In practice, the result may also be that there is no child protection logo available in the memory 406. In this case the process checks in step 612 if the TV decoder 404 operates within an allowed open time window of the day. This open time window is adjustable by the user. It starts for example at 8 o'clock in the morning and lasts until 10 o'clock in the evening. If the TV decoder 404 is operated within the open time window then the image of the television program is displayed in step 605 even though no child protection information is found in the memory 406. However, if the operating time is outside of the open time window then the display of the image data of the selected television program is blocked in step 606 like in the case when the child protection information is outside the allowed range. In such a situation again, a message is displayed to the user that the image of the selected TV channel is e.g. blocked and the entry of a code is required to unblock the TV channel. Then the process continues as it has already been described above.

In another embodiment of the invention, it is continuously checked if the TV decoder 404 is operated within the open time window. When the operation time is outside the open time window, this embodiment requires the entry of a code to enable the display of any TV channel regardless of the presence or absence of child protection.

Alternative embodiments of the present invention provide more flexibility with regard to the actions which are taken if certain viewing conditions are not met. E.g. if the child protection information is outside the allowed range, the image of the selected TV channel is displayed anyway but before that, a message is displayed informing the user about the viewing condition which is currently not complied with.

In the embodiment of the invention shown in figure 4, the child protection decoder 405 is similar to the TV decoder 404. This setup requires that the DSLAM 205 delivers two TV program streams to the gateway 206. One of the TV program streams is processed by the TV decoder 404 for being displayed on the display 408 while the other TV program stream is processed by the child protection decoder 405 to detect child protection information as it has been described above. Hence, even though only one TV program is actually watched, the involved networks have to carry one additional TV program stream.

According to an alternative embodiment of the invention the child protection information decoder 405 requests from the DSLAM 205 only video data enabling to decode a single frame. Then the process of detecting the child protection information is executed on this frame. If child protection information is found, it is stored in the memory 406. If not, a frame of the next TV channel is requested by the decoder 405. The detection and switching through the TV channels is so fast that the child protection logo is detectable even if it is only shown for a short period of time at the beginning of the program. In the alternative variant the additional video data beyond the actually watched TV program is significantly reduced compared to the previously described embodiment.

For the implementation of the architecture on the hardware level in the user premises there are several possibilities. In a first implementation the gateway 206, the TV decoder 404 and child protection decoder 405 are three different devices. In a second implementation, gateway 206, TV decoder 404 and child protection decoder 405 are implemented in two separate devices. For the second implementation, there are three different variants. In the first variant, the gateway 206 is combined with the TV decoder 404 in one device and the child protection decoder 405 is a second device. In the second variant, the gateway 206 is combined with the child protection decoder 405 in a single device and the TV decoder 404 is a separate device. In the third variant the gateway 206 is one device and the TV decoder 404 and the child protection decoder 405 are combined into a separate device. Finally, according to a third implementation, gateway 206, TV decoder 404 and child protection decoder 405 are combined into a single device.

The TV decoder 404 and the child protection decoder 405 are implemented as hardware device or as a piece of software embedded within computer or running on the central processing unit of the gateway 206.

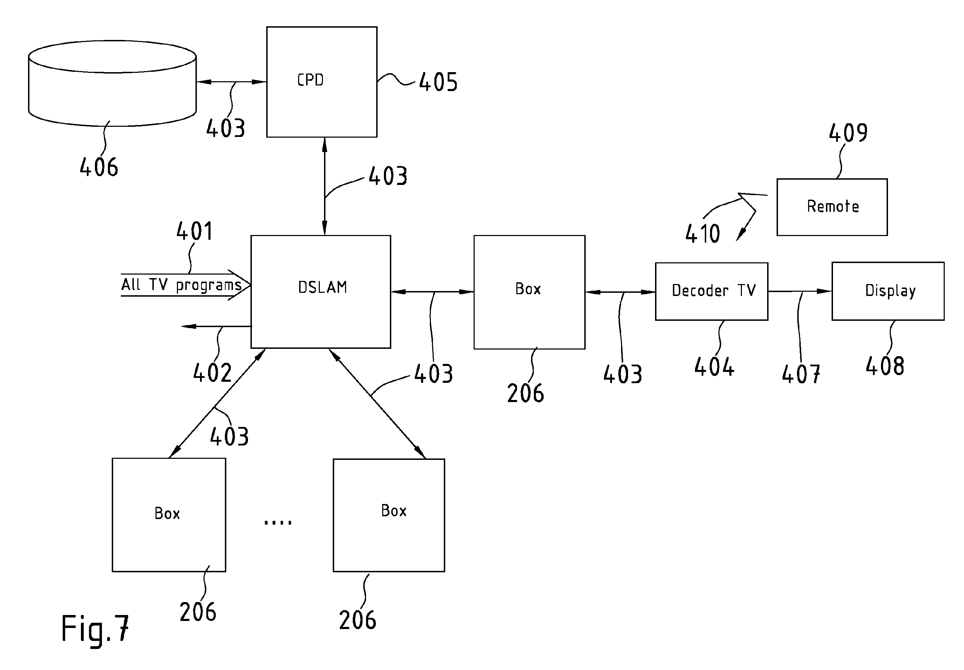

Figure 7 illustrates the global architecture of another embodiment of the IPTV system 200 from the DSLAM 205 to a display device 408. The architecture of the second embodiment shown in figure 7 is very similar to the architecture shown in figure 4 and the main difference is that the child protection decoder 405 and the memory 406 are arranged on the level of the DSLAM 205. The child protection decoder 405 switches through all receivable TV channels to detect and accumulate child protection information in the memory 406. All gateways 206 connected to the DSLAM 205 have access to the memory 406 and can request the available child protection information. The process of detecting child protection information in a TV channel as well as the information stored in the memory 406 is identical to what is described with reference to the first embodiment.

Software algorithms capable of searching for transparent, semi-transparent or opaque logos are known in the art. One example of such technology is published in US 8,396,302 B2. However, it is noted that the present invention does not depend on what kind of technologies are chosen for the logo detection. The present invention is feasible utilizing any technology which is capable of detecting a logo 103 (Figure 1A) as well as a text insertion 104 (Figure 1B).

The DSLAM 205 is only an example of a network node. The present invention is not limited to xDSL network technology. In other embodiments of the invention, the user premises are connected by different technologies such as coaxial cable or optical fibers. In these cases, other types of network nodes play the role of the DSLAM.

### List of Reference Signs

- 100: TV set
- 101: TV screen
- 102: broadcaster logo
- 103: child protection logo
- 104: text insertion
- 200: IPTV system
- 201: server of content service provider
- 202: link
- 203: content delivery network
- 204A to 204C: link
- 205A to 205C: DSLAM
- 206: gateway
- 207: connections
- 208: home/apartment use the premises
- 211: LAN
- 212: devices
- 301, 302: room
- 303A, 303B: power line plug
- 304: Ethernet switch
- 305: LAN transmitter/receiver
- 306A, 306B: TV decoder
- 307A, 307B: TV receiver
- 308: portable computer
- 401, 402: arrow
- 403: bidirectional connections
- 404: TV decoder
- 405: child protection decoder
- 406: memory
- 407: connection
- 408: display device
- 409: remote control
- 500-508: process steps
- 601-612: process steps

## Claims

1. Method for providing supplemental information associated with a television program in an IPTV system (200), wherein the method comprises
- switching all receivable TV channels with a TV decoder (404);
- detecting sequentially child protection information contained in the video signal of the received TV channels; and if child protection information (103, 104) is detected, then
- storing the detected child protection information in conjunction with an identifier of the associated TV channel in a memory (406).

2. Method according to claim 1, wherein the method further comprises the step of
- switching (602) to a TV channel selected by a user;
- checking (603) if for the selected TV channel a child protection information (103, 104) is stored, and if such child protection information is found, then
- verifying (604) if the child protection information is within a predefined range;
- displaying (605) the image of the selected TV channel if the child protection information is within the predefined allowed range; and
- executing a user defined action if the child protection information is outside the predefined allowed range.

3. Method according to claim 2, wherein the method further comprises the step of displaying the stored child protection information together with the image of the selected TV channel for a limited period of time.

4. Method according to claim 2, wherein the method further comprises the step of displaying a message that the selected TV channel is associated with a child protection information outside the allowed range.

5. Method according to claim 2, wherein the method further comprises the steps of verifying if the TV decoder (404) is operated within an open time window (612) if no child protection information is found;
displaying the image of the selected TV channel (605) if the TV receiver is operated within the open time window; and
executing a user defined action (607) if the TV decoder (404) is operating outside the open time window.

6. Method according to claims 4 or 5, wherein the method further comprises the step of displaying a message requesting the user to enter a code (607) to enable the display of the selected TV channel.

7. Method according to claim 1, wherein the method further comprises the step of displaying upon user request a list of receivable TV channels in conjunction with the associated and stored child protection information.

8. Method according to one or several of the preceding claims, wherein the user defined action includes blocking the image of the selected TV channel (606).

9. Television receiver including a computer network access device (206) providing a TV receiver with IP-TV signals, wherein the TV receiver further includes a TV decoder (404), and a child protection decoder (405), wherein the TV decoder (404) provides a video signal selected by the user that eventually is displayed, wherein the child protection decoder (405) switches through all receivable TV channels and sequentially detects child protection information contained in the video signal of the TV channel which is currently processed, and if child protection information is detected, then the detected child protection information is stored in conjunction with an identifier of the associated TV channel in a memory (406).

10. Television receiver according to claim 9,
wherein TV channel navigation is restricted to those TV channels associated with child protection information within a predefined allowed range or with no child protection information.

11. Television receiver according to claim 9, comprising means to restrict TV channel navigation to those TV channels associated with child protection information within a predefined allowed range or no child protection information is stored for the selected TV channel when the TV receiver is operated within a predefined open time window.

12. Digital Subscriber line access multiplexer (DSLM 205) including a child protection decoder (405) and a memory (406), wherein the DSLAM (205) is adapted to execute a method according to claim 1.
